# EUROPEAN PATENT APPLICATION

(11) **EP 4 768 307 A1**
(43) Date of publication of application: **01.07.2026**
(21) Application number: 25864513.4
(22) Date of filing: 22.07.2025
(51) Int. Cl.: B60L 3/00, H01M 10/42, H04L 12/46

(54) **SYSTEM AND METHOD FOR MANAGING BATTERY**

(30) Priority: 21.10.2024 KR 20240143752
(71) Applicant: LG ENERGY SOLUTION, LTD., Seoul 07335 (KR)
(72) Inventor: CHOI, Moon Gyu, Daejeon 34122 (KR); RYU, Dongwon, Daejeon 34122 (KR); LEE, Changjoon, Daejeon 34122 (KR)
(74) Representative: Plasseraud IP
(86) International application number: PCT/KR2025/010752
(87) International publication number: WO 2026/089212

(57) **Abstract**

A system and method for managing battery may notify a vehicle user of a dangerous situation in advance by detecting whether simultaneous fusion of a positive relay and a negative relay has occurred while communication with the battery is interrupted.

## Description

### [Technical Field]

The present disclosure relates to a system and method for managing battery.

### [Background Art]

Currently commercialized secondary batteries include nickel-cadmium batteries, nickel-metal hydride batteries, nickel-zinc batteries, and lithium secondary batteries. Among these, lithium secondary batteries, having virtually no memory effect compared to nickel-based secondary batteries, have come to prominence with advantages, such as free charging and discharging, extremely low self-discharge rates, and high energy density.

Recently, secondary batteries (batteries) have been widely used for power and energy storage in vehicles, such as electric two-wheelers and electric vehicles, as well as in mediumand large-scale devices, such as energy storage systems (ESS). This has led to increased interest in batteries and more active research and development in battery-related fields. Furthermore, for vehicle batteries, commercialization and research on interchangeable battery packs have actively underway.

Lithium secondary batteries primarily use lithium oxides and carbon materials as positive electrode active materials and negative electrode active materials, respectively. Also, lithium secondary batteries include an electrode assembly, in which positive and negative electrode plates, each coated with positive electrode and negative electrode active materials, are positioned with a separator therebetween, and an outer casing (i.e., a battery case) that seals and encloses the electrode assembly together with an electrolyte. Depending on the shape of the outer casing, lithium secondary batteries may be classified as can-type secondary batteries, in which the electrode assembly is housed in a metal can, and pouch-type secondary batteries, in which the electrode assembly is housed in a pouch formed of aluminum laminate sheet. Can-type secondary batteries may further be categorized into prismatic and cylindrical secondary batteries, depending on their shape.

A plurality of secondary batteries may be electrically connected and housed together within a module case (module housing) or pack case (pack housing), forming a battery module or battery pack. Here, each secondary battery included in a battery module or battery pack may be referred to as a battery cell.

In a battery system including a plurality of batteries, such as battery cells, battery modules, or battery packs, connected in parallel, a battery management system (BMS) located within the batteries detects battery failures and operates and manages the battery system. In a parallel battery pack system, if a specific battery pack experiences a communication failure and both positive and negative relays being fused simultaneously, among the failure types, an upperlevel controller, the battery management system, has no way to receive relay failure information via controller area network (CAN) communication, and the relays for the specific battery pack are physically fused. In the related art, in the event of CAN communication failures, an alarm that halts the operation of vehicle itself and prompts a repair shop for inspection. However, even a simple communication failure in a single battery pack may ultimately disable the entire vehicle system, resulting in user inconvenience and overdiagnosis.

### [Disclosure]

### [Technical Problem]

According to an embodiment of the present disclosure, there are provided a system and method for managing battery detecting whether a positive relay and a negative relay are simultaneously fused while communication with a battery is interrupted.

The problem to be solved by the present disclosure is not limited to the aforementioned problem and may be expanded in various manners without departing from the spirit and scope of the present disclosure.

### [Technical Solution]

According to an embodiment of the present disclosure, a system for managing battery mounted in a vehicle includes: a plurality of slave battery management devices, respectively corresponding to a plurality of batteries; and a master battery management device receiving data from the plurality of slave battery management devices and acquiring a relay status of one or more batteries in a state in which communication with one or more batteries among the plurality of batteries is interrupted.

The master battery management device may acquire the relay status of the battery by using a current flowing through each of the plurality of batteries and a current flowing through a junction box in which the master battery management device is mounted.

The master battery management device may determine that a battery in which a positive relay and a negative relay are simultaneously fused exists when the current flowing through the junction box is greater than a sum of the currents flowing through each of the plurality of batteries.

The master battery management device may determine that a battery in which both the positive relay and the negative relay are simultaneously fused exists, when the current flowing through the junction box is greater than a value obtained by adding a preset margin to the sum of the currents flowing through each of the plurality of batteries.

The master battery management device may provide a fault alarm message to the vehicle when it is determined that the battery in which both positive and negative relays fused simultaneously exists.

The master battery management device may acquire the relay status of the battery, when the vehicle is in a wakeup mode, is in a state in which communication with one or more of the batteries is interrupted, and the voltage of the junction box is greater than a preset reference value,

The master battery management device may acquire the relay status of the battery when the vehicle is in a driving mode or a charging mode.

The master battery management device may receive data from the slave battery management device via a controller area network (CAN) communication.

The battery may represent one of a battery cell, a battery cell group, a battery module, a battery pack, and a battery rack.

According to an embodiment of the present disclosure, a method for managing battery performed by a system for managing battery mounted on a vehicle and including a plurality of slave battery management devices respectively corresponding to a plurality of batteries and a master battery management device receiving data from the plurality of slave battery management devices includes: acquiring. by the master battery management device, a relay status of one or more of the batteries in a state in which communication with one or more of the batteries among the plurality of batteries is interrupted.

In the relay status acquiring operation, the relay status of the battery may be acquired by using a current flowing through each of the plurality of batteries and a current flowing through a junction box in which the master battery management device is mounted.

In the relay status acquiring operation, when the current flowing through the junction box is greater than a sum of the currents flowing through each of the plurality of batteries, it may be determined that a battery in which a positive relay and a negative relay are simultaneously fused exists.

The method for managing battery may further include: providing a fault alarm message to the vehicle when it is determined that the battery in which both positive and negative relays fused simultaneously exists.

In the relay status acquiring operation, when the vehicle is in a wakeup mode, is in a state in which communication with one or more of the batteries is interrupted, and the voltage of the junction box is greater than a preset reference value, the relay status of the battery may be acquired.

According to an embodiment of the present disclosure, a computer-readable storage medium records a program for executing a method for managing battery described above on a computer.

### [Advantageous Effects]

According to an embodiment of the present disclosure, by detecting whether simultaneous fusion of a positive relay and a negative relay has occurred while communication with the battery is interrupted, a vehicle user may be notified of a dangerous situation in advance.

The effects of various embodiments of the present disclosure are not limited to the effects described above, and it will be apparent to those skilled in the art that various effects are inherent in the present disclosure.

### [Description of Drawings]

FIG. 1 is a block diagram illustrating a battery management device according to an embodiment of the present disclosure.
FIG. 2 is a block diagram illustrating a system for managing battery according to an embodiment of the present disclosure.
FIG. 3 is a flowchart illustrating a method for managing battery according to an embodiment of the present disclosure.
FIG. 4 is a flowchart illustrating a battery relay status acquisition step illustrated in FIG. 3.
FIG. 5 is a diagram illustrating an example of a battery relay status acquisition operation according to an embodiment of the present disclosure.

### [Mode for Invention]

Hereinafter, embodiments are described in detail with reference to the accompanying drawings. Advantages and features of the present disclosure and methods of accomplishing the same will be apparent by referring to embodiments described below in detail in connection with the accompanying drawings. However, the present disclosure is not limited to the embodiments disclosed below and may be implemented in various different forms, and the embodiments are defined only by the scope of claims.

Throughout the specification, like reference numerals refer to like elements. Unless otherwise defined, all terms (including technical and scientific terms) used herein have the same meaning as commonly understood by one of ordinary skill in the art to which the invention pertains. In addition, terms, such as those defined in commonly-used dictionaries, will not be interpreted in an idealized or overly formal sense unless expressly so defined herein.

In this specification, terms, such as "first" and "second" are used to distinguish one component from another, and the scope of the invention is not limited by these terms. For example, a first component may be referred to as a second component, and similarly, the second component may also be referred to as the first component.

In this specification, the identification codes (e.g., a, b, c, etc.) for each step are used for convenience of description and do not describe the order of each step, and respective steps described herein may be performed in a different order than that which is explicitly described. In other words, the respective steps may be performed in the same order as described, simultaneously, or in a reverse order.

In this specification, expressions, such as "has", "may have", "includes" or "may include" indicate the presence of a corresponding feature (e.g., a component, such as a number, function, operation, or part), and do not exclude the presence of additional features.

Meanwhile, the term "~unit" used in this embodiment refers to a hardware element, such as an FPGA or an ASIC, and a "~unit" executes certain roles. However, a "~unit" is not limited to software or hardware. A "~unit" may be configured to reside in an addressable storage medium or configured to execute one or more processors. Therefore, a "~unit" may include, for example, elements, such as software elements, object-oriented software elements, class elements, and task elements, processes, functions, attributes, procedures, subroutines, segments of a program code, drivers, firmware, microcode, circuitry, data, DBs, data structures, tables, arrays, and variables. Functions provided in elements and "~units" may be combined into fewer elements and "~units" or subdivided into additional elements and "~units."

Hereinafter, a system and method for managing battery according to an embodiment of the present disclosure will be described in detail with reference to the accompanying drawings.

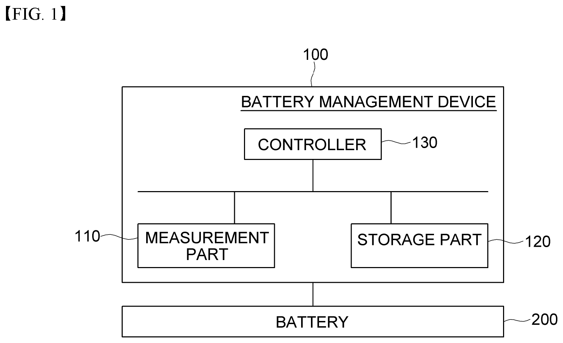

First, a battery management device according to an embodiment of the present disclosure will be described with reference to FIG. 1.

FIG. 1 is a block diagram illustrating a battery management device according to an embodiment of the present disclosure.

Referring to FIG. 1, a battery management device 100 according to an embodiment of the present disclosure may perform diagnostic and/or control operations of a battery 200.

Here, the battery 200 may be a concept including a battery cell representing a single secondary battery, a battery cell group including a plurality of battery cells, a battery module, a battery pack, a battery rack, etc.

To this end, the battery management device 100 may include a measurement part 110, a storage part 120, and a controller 130.

The measurement part 110 may be configured to measure status information of the battery 200.

Here, the status information of the battery 200 may include the internal and/or external status of the battery 200. For example, the measurement part 110 may measure information, such as voltage, current, temperature, state of charge (SOC), depth of discharge (DOD), internal resistance, state of health (SOH), idle status, overvoltage or overcurrent status, and balancing status, as an internal status of the battery 200. To this end, the measurement part 110 may include various sensors, such as a voltage sensor or current sensor. As another example, the measurement part 110 may measure status information, such as temperature, humidity, and smoke around the battery 200, as external conditions of the battery 200. To this end, the measurement part 110 may include sensors, such as a temperature sensor, humidity sensor, and smoke sensor. In this regard, the measurement part 110 may also be referred to as a sensor.

Here, the measurement part 110 may measure voltage, current, temperature, etc. through sensors to one-dimensionally measure the status information of the battery 200. Furthermore, the measurement part 110 may perform two-dimensional processing, such as calculations, on the one-dimensionally acquired information. For example, the measurement part 110 may measure status information of the battery 200, such as the state of charge (SOC), internal resistance, state of health (SOH), and imbalancing, based on the status information, such as voltage, current, and temperature.

The measurement part 110 may then transmit the measured status information of the battery 200 to the controller 130.

The storage part 120 may be configured to store computer-executable instructions, program code, program data, and/or other suitable forms of information for each component of the battery management device 100, i.e., the measurement part 110 and/or the controller 130, to perform their functions. A program stored in the storage part 120 may include a set of instructions executable by the controller 130. In an embodiment of this document, the storage part 120 may be memory (volatile memory, such as random access memory, non-volatile memory, or a suitable combination thereof), one or more magnetic disk storage devices, optical disk storage devices, flash memory devices, or any other form of storage mediums accessible by the battery management device 100 and capable of storing desired information, or a suitable combination thereof.

Here, the storage part 120 may be implemented as a form integrated with another component included in the battery management device 100, such as a component functioning as the controller 130. For example, the storage part 120 may be implemented as an embedded memory equipped in a processor functioning as the controller 130.

The controller 130 may receive measured status information from the measurement part 110. Furthermore, the controller 130 may perform diagnostic and/or control operations on the battery 200 using the status information received from the measurement part 110.

Here, the controller 130 may transmit or store information according to the diagnostic operation and/or control operation of the battery 200 to another component. Here, the other component may be a component included in the battery management device 100 according to an embodiment of the present disclosure or may be a component included in another device existing outside the battery management device 100. In particular, when the target battery 200 is mounted on a vehicle, the battery management device 100 may transmit information according to the diagnostic operation and/or control operation of the battery 200 to a vehicle upper control system, for example, a vehicle control unit (VCU), an electronic control unit (ECU), etc.

Furthermore, the controller 130 may transmit information according to the diagnostic and/or control operations of the battery 200 using various wired or wireless communication configurations or methods. For example, the controller 130 may transmit information according to the diagnostic and/or control operations of the battery 200 to the vehicle control system using controller area network (CAN) communication.

Furthermore, the controller 130 may be configured to control a charging or discharging operation of the battery 200 as part of the battery 200 control operation. In this case, the controller 130 may directly perform the charging or discharging control of the battery 200. Of course, the controller 130 may also indirectly instruct or control other components located inside or outside the battery management device 100 to perform the charging or discharging control.

Furthermore, the controller 130 may perform processing operations depending on the state of the battery 200. Here, the controller 130 may be configured to perform different processing operations for each state. Furthermore, the controller 130 may perform at least partially the same processing operations for different states. Furthermore, the processing operations performed by the controller 130 do not necessarily include only active operations and may also include passive operations. In particular, the processing operations performed by the controller 130 may include operations that do not involve any control or communication.

Furthermore, when the controller 130 directly performs processing operations of the battery 200, the controller 130 may transmit the results of the processing to other components.

Furthermore, the battery management operations according to an embodiment of this document may be applied not only to a single battery cell, but also to units including a plurality of battery cells, such as cell assemblies, battery modules, battery packs, battery racks, and energy storage systems (ESS).

In addition, the controller 130 may optionally include, at least in part, processors, controllers, application-specific integrated circuits (ASICs), other chipsets, logic circuits, registers, communication modems, data processing devices, and the like, all of which are known in the art, to perform related operations or functions. Furthermore, these operations may be implemented in software, in which case the programs may be stored in the storage part 120. In this regard, the controller 130 may be replaced by terms, such as processor, control unit, or chipset. Furthermore, at least some of the functions of the measurement part 110 may also be implemented using these components.

Furthermore, the controller 130 does not necessarily have to be physically integrated or located in the same location. For example, some functions of the controller 130 may be performed on the battery 200, while other functions of the controller 130 may be performed on the vehicle side.

More specifically, at least a portion of the controller 130 may be implemented by a battery management system (BMS), typically included in a battery pack, energy storage system (ESS), or the like. In this case, at least a portion of the controller 130 may be implemented to be included in the battery 200. Alternatively, at least a portion of the controller 130 may be located outside the battery management device 100. For example, at least a portion of the functions of the controller 130 may be implemented by a vehicle-mounted control device, such as a VCU or ECU. Furthermore, the measurement part 110 may also be implemented as an integrated or separate component or element.

Meanwhile, a single battery management device 100 may perform integrated diagnostic and/or control operations for each of a plurality of batteries 200. Of course, a single battery management device 100 may be provided for each battery 200. For example, if three batteries 200 exist, three battery management devices 100 may be provided to perform diagnostic and/or control operations for each of the three batteries 200. In this case, one of the plurality of battery management devices 100 may operate as a master, and the remaining battery management devices 100 may operate as slaves. The single battery management device 100 operating as a master may control the operations of the remaining battery management devices 100 operating as slaves to perform integrated management of all of the plurality of batteries 200. Furthermore, all of the plurality of battery management devices 100 may operate as slaves, and a separate battery management device 100 may be provided to control the operations of all of the plurality of battery management devices 100 operating as slaves.

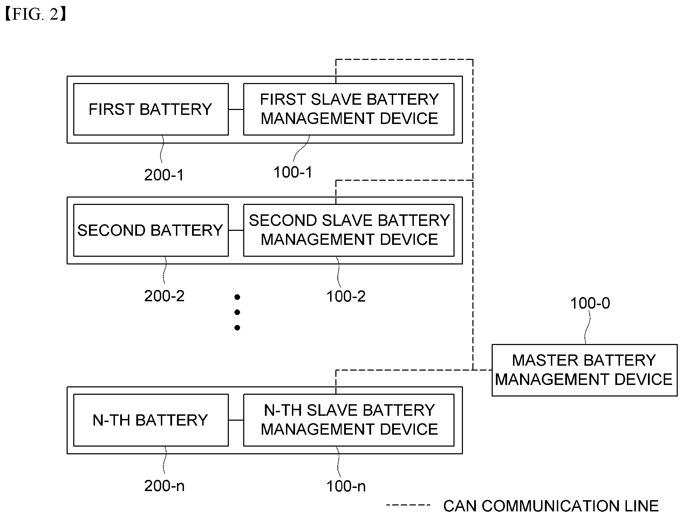

Now, a system for managing battery according to an embodiment of the present disclosure will be described with reference to FIG. 2.

FIG. 2 is a block diagram illustrating a system for managing battery according to an embodiment of the present disclosure.

Referring to FIG. 2, the system for managing battery includes a plurality of slave battery management devices 100-1 to 100-n respectively corresponding to a plurality of batteries 200-1 to 200-n and a master battery management device 100-0 connected to the plurality of slave battery management devices 100-1 to 100-n. The master battery management device 100-0 may be mounted on a vehicle.

Here, each of the plurality of batteries 200-1 to 200-n may represent one of a battery cell, a battery cell group, a battery module, a battery pack, or a battery rack.

The master battery management device 100-0 may receive data from a plurality of slave battery management devices 100-1 to 100-n and may acquire the relay status of one or more batteries 200 when communication with one or more batteries 200 among the plurality of batteries 200-1 to 200-n is interrupted.

Furthermore, the master battery management device 100-0 may receive data from the plurality of slave battery management devices 100-1 to 100-n via CAN communication. For example, the master battery management device 100-0 may receive relay status information, current values, unique identification information for the battery 200, etc. from each of the plurality of slave battery management devices 100-1 to 100-n.

Accordingly, the system for managing battery according to an embodiment of the present disclosure may detecting whether simultaneous fusion of the positive relay and the negative relay occurs while communication with the battery 200 is interrupted, thereby informing a vehicle user about a dangerous situation in advance.

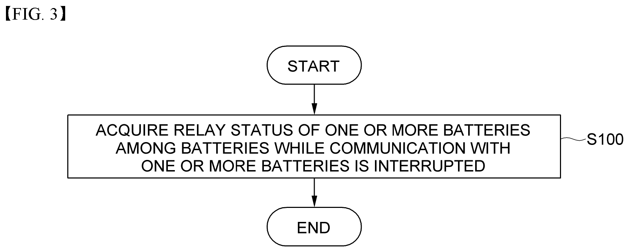

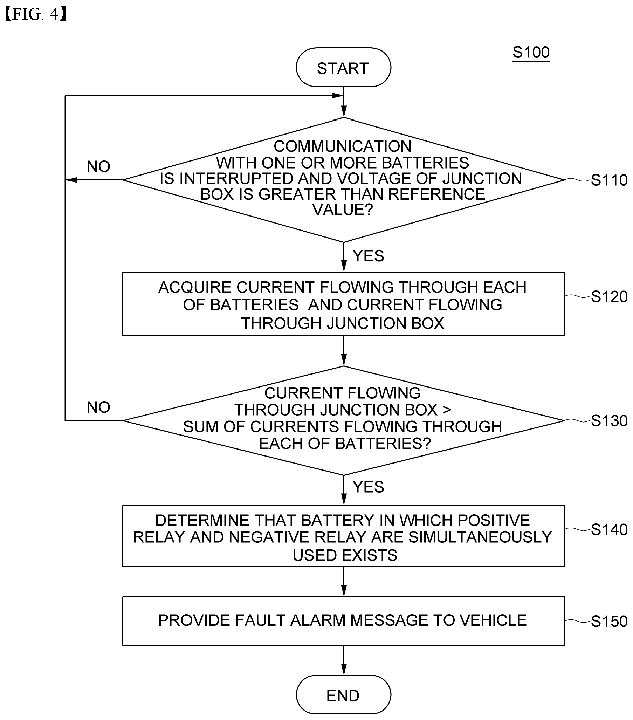

Herein, a battery relay status acquisition operation, which is a method for managing battery, according to an embodiment of the present disclosure, will be described in more detail with reference to FIGS. 3 and 4.

FIG. 3 is a flowchart illustrating a method for managing battery according to an embodiment of the present disclosure, and FIG. 4 is a flowchart illustrating a battery relay status acquisition step illustrated in FIG. 3.

Referring to FIG. 3, the master battery management device 100-0 may acquire a relay status of one or more batteries 200 among the plurality of batteries 200-1 to 200-n while communication with the one or more batteries 200 is interrupted (S100).

That is, the master battery management device 100-0 may acquire a relay status of the battery 200 by using the current flowing through each of the plurality of batteries 200-1 to 200-n and the current flowing through a junction box in which the master battery management device 100-0 is mounted. Here, the master battery management device 100-0 may receive a current value flowing through each of the plurality of batteries 200-1 to 200-n from each of the plurality of slave battery management devices 100-1 to 100-n.

In more detail, with reference to FIG. 4, the master battery management device 100-0 may acquire a relay status of one or more batteries 200 when the vehicle is in a wakeup mode, communication with one or more batteries 200 is interrupted, and a voltage of the junction box is greater than a preset reference value (S110-Y). For example, if the battery 200 is "one battery cell with capacity of 2.5 V" and there are a total of 96 batteries 200, the reference value may be set to "200 v = (96 * 2.5 v) - 40 v", taking into account a margin of 40 v to avoid misdiagnosis. When the vehicle wakes up, the relay of the battery 200 is opened. That is, if the voltage of the junction box is measured to be greater than the reference value of "200 v", it may mean that simultaneous fusion of the positive relay and the negative relay has occurred. In other words, before performing a battery relay status acquisition operation to determine whether simultaneous fusion of the positive relay and the negative relay has occurred, a pre-diagnosis operation may be performed to compare the voltage of the junction box with the reference value to avoid misdiagnosis due to current deviation of the battery 200.

Here, the master battery management device 100-0 may acquire the relay status of the battery 200 when the vehicle is in driving or charging mode.

That is, the master battery management device 100-0 may acquire the current flowing through each of the plurality of batteries 200-1 to 200-n and the current flowing through the junction box (S120).

If the current flowing through the junction box is greater than the sum of the currents flowing through each of the plurality of batteries 200-1 to 200-n (S130-Y), the master battery management device 100-0 may determine that a battery 200 in which both a positive relay and a negative relay simultaneously are fused is present (S140).

Here, the master battery management device 100-0 may determine the presence of a battery 200 with both a positive relay and a negative relay simultaneously fused, taking into account a margin to ensure the accuracy of relay status acquisition. That is, if the current flowing through the junction box is greater than a value obtained by adding a preset margin to the sum of the currents flowing through each of the plurality of batteries 200-1 to 200-n, the master battery management device 100-0 may determine the presence of a battery 200 with both a positive relay and a negative relay simultaneously fused.

Thereafter, if the presence of a battery 200 with both a positive relay and a negative relay simultaneously fused is determined, the master battery management device 100-0 may provide a fault alarm message to the vehicle (S150).

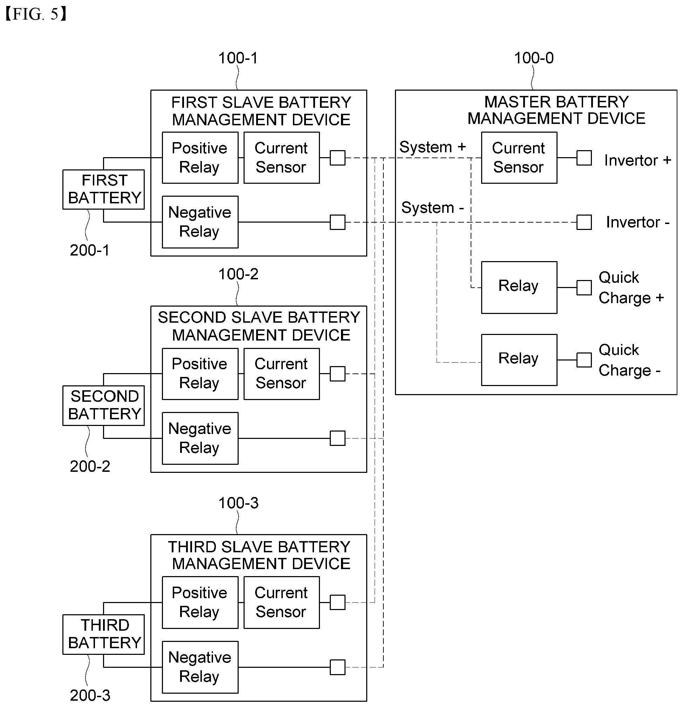

Now, an example of a battery relay status acquisition operation according to an embodiment of the present disclosure will be described with reference to FIG. 5.

FIG. 5 is a diagram illustrating an example of a battery relay status acquisition operation according to an embodiment of the present disclosure.

A system for managing battery for describing an example of a battery relay status acquisition operation according to an embodiment of the present disclosure may include three slave battery management devices 100-1 to 100-3, respectively corresponding to three batteries 200-1 to 200-3, and a master battery management device 100-0 connected to the three slave battery management devices 100-1 to 100-3.

If only the positive relay is fused or another fault (in cases in which driving is allowed without the battery in question, such as a sensor failure or a defective battery cell) in the battery 200 is diagnosed, a relay of the corresponding battery 200 may be opened, driving may be made with the other battery 200.

However, if simultaneous fusion of the positive and negative relays occurs, the battery management device 100 cannot open the relay even if it controls the relay opening, resulting in a dangerous situation in which the voltage of the battery 200 remains on an inverter side. Here, charging and discharging may also be made on the vehicle side through the fused relay.

The master battery management device 100-0, which is an upper controller, may detect that the vehicle may operate with the remaining batteries 200 excluding the battery 200 (the corresponding battery itself controls the relay opening) due to a CAN communication failure with the battery 200, but since the relays of the battery are actually fused simultaneously, charging and discharging current may flow, and the master battery management device 100-0 is unaware of this situation. The master battery management device 100-0 operates the vehicle using the remaining batteries 200, excluding the battery 200 with which communication is interrupted. (The corresponding battery performs relay opening control on its own, but actual opening is impossible.) Furthermore, regardless of a vehicle mode (e.g., an ignition-off mode), a high voltage is constantly applied to the inverter, creating a dangerous situation.

To solve this problem, the system for managing battery according to an embodiment of this document may diagnose whether simultaneous fusion of the positive and negative relays has occurred even in a situation in which communication is interrupted and provide a vehicle operation stop alarm message based on a diagnosis result.

Referring to FIG. 5, the master battery management device 100-0 first determines whether communication with one or more batteries 200 is interrupted and whether the voltage of the junction box in which the master battery management device 100-0 is mounted is greater than the reference value.

If communication with one or more batteries 200 is interrupted and the voltage of the junction box is greater than the reference value, the master battery management device 100-0 may acquire the current value flowing to the first battery 200-1 from the first slave battery management device 100-1, acquire the current value flowing to the second battery 200-2 from the second slave battery management device 100-2, and acquire the current value flowing to the third battery 200-3 from the third slave battery management device 100-3.

Thereafter, the master battery management device 100-0 may determine whether the current value flowing through the junction box is greater than the sum of the current values flowing through each of the three batteries 200-1 to 200-3. If the current flowing through the junction box is greater than the sum of the currents flowing through each of the three batteries 200-1 to 200-3, the master battery management device 100-0 may determine that a battery 200 in which both the positive relay and the negative relay are simultaneously fused exists among the three batteries 200-1 to 200-3. Here, the master battery management device 100-0 may determine whether the battery 200 in which both the positive relay and the negative relay are simultaneously fused exists by taking into account a preset margin value. That is, if the current value flowing through the junction box is greater than a value obtained by adding the margin value to the sum of the current values flowing through each of the three batteries 200-1 to 200-3, the master battery management device 100-0 may determine that the battery 200 with both the positive relay and the negative relay fused simultaneously exists among the three batteries 200-1 to 200-3.

When it is determined that the battery 200 with both the positive relay and the negative relay fused simultaneously exists, the master battery management device 100-0 may provide a fault alarm message to the vehicle.

The operations according to the embodiments of this document described above may be implemented in the form of program instructions that may be executed through various computer means and recorded on a computer-readable storage medium. The computer-readable storage medium refers to any medium that participates in providing instructions to a processor for execution. The computer-readable storage medium may include program instructions, data files, data structures, or combinations thereof. For example, the computer-readable storage medium include magnetic mediums, optical storage mediums, and memory. Computer programs may also be distributed across network-connected computer systems, allowing computer-readable code to be stored and executed in a distributed manner. Functional programs, codes, and code segments for implementing the embodiments of this document may be readily inferred by programmers in the art to which the embodiments of this document pertain.

The embodiments of this document are intended to describe the technical concepts, and the scope of the technical concepts of the embodiments of this document is not limited by these embodiments. The scope of protection of the embodiments of this document should be interpreted by the claims below, and all technical concepts within the scope equivalent thereto should be construed as being included within the scope of the embodiments of this document.

### [DETAILED DESCRIPTION OF MAIN ELEMENTS]

100: battery management device,
100-0: master battery management device,
100-1: first slave battery management device,
100-2: second slave battery management device,
100-n: n-th slave battery management device,
110: measurement part,
120: storage part,
130: controller,
200: battery,
200-1: first battery,
200-2: second battery,
200-n: n-th battery

## Claims

1. A system for managing battery mounted in a vehicle, the system comprising:
a plurality of slave battery management devices, respectively corresponding to a plurality of batteries; and
a master battery management device receiving data from the plurality of slave battery management devices and acquiring a relay status of one or more batteries in a state in which communication with one or more batteries among the plurality of batteries is interrupted.

2. The system of claim 1, wherein the master battery management device acquires the relay status of the battery by using a current flowing through each of the plurality of batteries and a current flowing through a junction box in which the master battery management device is mounted.

3. The system of claim 2, wherein the master battery management device determines that a battery in which a positive relay and a negative relay are simultaneously fused exists when the current flowing through the junction box is greater than a sum of the currents flowing through each of the plurality of batteries.

4. The system of claim 3, wherein the master battery management device determines that a battery in which both the positive relay and the negative relay are simultaneously fused exists, when the current flowing through the junction box is greater than a value obtained by adding a preset margin to the sum of the currents flowing through each of the plurality of batteries.

5. The system of claim 3, wherein the master battery management device provides a fault alarm message to the vehicle when it is determined that the battery in which both positive and negative relays fused simultaneously exists.

6. The system of claim 1, wherein the master battery management device acquires the relay status of the battery, when the vehicle is in a wakeup mode, is in a state in which communication with one or more of the batteries is interrupted, and the voltage of the junction box is greater than a preset reference value,

7. The system of claim 1, wherein the master battery management device acquires the relay status of the battery when the vehicle is in a driving mode or a charging mode.

8. The system of claim 1, wherein the master battery management device receives data from the slave battery management device via a controller area network (CAN) communication.

9. The system of claim 1, wherein the battery represents one of a battery cell, a battery cell group, a battery module, a battery pack, and a battery rack.

10. A method for managing battery performed by a system for managing battery mounted on a vehicle and including a plurality of slave battery management devices respectively corresponding to a plurality of batteries and a master battery management device receiving data from the plurality of slave battery management devices, the method comprising
acquiring. by the master battery management device, a relay status of one or more of the batteries in a state in which communication with one or more of the batteries among the plurality of batteries is interrupted.

11. The method of claim 10, wherein, in the relay status acquiring operation, the relay status of the battery is acquired by using a current flowing through each of the plurality of batteries and a current flowing through a junction box in which the master battery management device is mounted.

12. The method of claim 11, wherein, in the relay status acquiring operation, when the current flowing through the junction box is greater than a sum of the currents flowing through each of the plurality of batteries, it is determined that a battery in which a positive relay and a negative relay are simultaneously fused exists.

13. The method of claim 12, further comprising: providing a fault alarm message to the vehicle when it is determined that the battery in which both positive and negative relays fused simultaneously exists.

14. The method of claim 10, wherein, in the relay status acquiring operation, when the vehicle is in a wakeup mode, is in a state in which communication with one or more of the batteries is interrupted, and the voltage of the junction box is greater than a preset reference value, the relay status of the battery is acquired.

15. A computer-readable storage medium recording a program for executing a method for managing battery described in any one of claims 10 to 14 on a computer.
